# EUROPEAN PATENT APPLICATION

(11) **EP 2 110 226 A1**
(43) Date of publication of application: **21.10.2009**
(21) Application number: 08154479.3
(22) Date of filing: 14.04.2008
(51) Int. Cl.: B29C 65/00, A61J 1/14, A61M 5/145, B65D 83/00, B29C 65/48, B29C 65/02, B29L 22/02, F15B 1/10

(54) **Device and method for manufacturing diaphragms for expansion vessels**

(71) Applicant: Medibeg N.V., 8560 Wevelgem (BE)
(72) Inventor: Debal, Dany, 8560 Wevelgem (BE)
(74) Representative: Brants, Johan P.E.

(57) **Abstract**

The invention is related to a device suitable for the positioning and bonding of two elastic bladder type diaphragm sections (3,4) each section is provided with at least one rim (8,9), whereby the rims of the sections will be secured together in any suitable manner, such as vulcanisation said device comprising,
a frame (13), a support element (14) connected to said frame, whereby the support element is provided with, and axially extending through, a bounding mould (12), which mould is composed of segments (15), each of which is provided with control elements (16) connecting these segments and the support element (14), such that the bounding mould is able to be positioned in an open segmented position and a closed circular position, in which said closed position the mould is able to support the rim of said sections under a uniform circumferential tension.

## Description

### FIELD OF THE INVENTION

The present invention relates to a bladder-shaped diaphragm of flexible material, such as rubber, suitable within an expansion vessel, composed out of several interconnected sections. The invention also comprises a mould suitable for the manufacture of a bladder-shaped diaphragm. The invention moreover comprises a method for the manufacturing of a diaphragm.

### BACKGROUND OF THE INVENTION

Expansion vessels in general comprise a housing containing a bladder-shaped diaphragm of flexible material, which serves as the division between a liquid and a pressurized gas.

To facilitate manufacture of the bladder, it is desirable that it be formed from two substantially cup-shaped or cylindrical sections, the rims of the two cup-shaped sections being secured together in any suitable manner, such as bonding by hot or cold vulcanisation or by the use of a cement or by the use of adhesives with or without heat treatment. For facility in describing the invention, such connected junction between the two rims will be thereinafter referred to as the bonded zone

Since the bonded zone in fact forms a discontinuity in the integral wall of the bladder, in order to strengthen the bonded zone it would be necessary to increase the surface area of the bond and to use a means of bonding that is as strong as possible. Unfortunately, due to the physical size of the bladder wall, it is not always possible or desirable to have a bonded zone covering a large area.

To obtain bladders of a relative long life, it is desirable that the manufacturing process is defect free. Since the current manufacturing method involves the application of pressure, not only to the bonded zone but also in an area outside the overlapping material, this method results in material deformations. Moreover, with the current techniques it is difficult to apply pressure evenly to the bonded zone. It is necessary to modify the way in which pressure is applied to avoid material deformations and the creation of cracks and leakages.

Furthermore it is desirable that the bladder is of uniform size and shape to allow standardized fitting into the housing of the pressure vessels. Especially for large sized bladders, it is necessary to improve the positioning of the sections when being secured together.

The invention relates to a method for manufacturing, by confection, a membrane for an expansion vessel which does not have these and other inconveniences and which is relatively simple to apply, provides accurate positioning of the bladder sections and results in uniform bladders over a broad range of sizes and shapes.

### SUMMARY OF THE INVENTION

The present invention has for its object to provide a solution for the limitations imposed by the current technique.

This object is achieved by the use of a device containing a bounding mould suitable for the positioning and bonding of two elastic bladder type sections, each section provided with at least one rim, whereby the rims of the sections are secured together in a suitable manner.

By this means it is possible to provide accurate positioning of the sections, to reduce the area to which pressure is applied to a minimum and to distribute the pressure evenly over the bonding zone. The bladders provided are uniform in shape, size, with a minimum in defects resulting in product uniformity and durability.

In a preferred embodiment of the device, the bounding mould consists of at least 3 segments, preferably more than 4, most preferably 6. It is further preferred that the segments' rim is wedge-shaped. Most preferred is a device provided with a corresponding counter-mould able to enclose the bounding mould.

The invention further provides a section of a flexible material, such as rubber, suitable for use with said device, comprising a circumferential positioning rim, with a first internal diameter and a second internal diameter, which second diameter is different from the first.

In a preferred embodiment, said section's positioning rim is preferably wedge-shaped. It is further preferred that the positioning rim is complementary to the rim shape of the bounding mould. Most preferred is a section wherein the positioning rim has an average wall thickness smaller than the wall thickness of the bladder.

The invention further provides a bladder for use in an expansion vessel, consisting of several interconnected sections.

In a preferred embodiment, said bladder consists of interconnected sections joined at their positioning rims by use of said device. Most preferred, the interconnected section has a thickness substantially similar to the average wall thickness of the bladder.

The invention further provides a method for manufacturing said bladder, comprising the use of said device. Most preferred, this method uses at least three of said sections.

### DETAILED DESCRIPTION

The invention will now be further elucidated on the basis of several non-limitative embodiments. It will be apparent that many variations and applications are still possible within the scope of the invention for a skilled person in the field.

With a view to better show the characteristics of the invention, preferred embodiments of a device for manufacturing a bladder according to the invention are described as an example, without any restrictive character, with reference to the accompanying drawings in which:
Figure 1 represents a bounding mould according to the invention in (a) open and (b) closed position.
Figure 2 represents a front view of a pressure vessel fitted with a bladder-type diaphragm.
Figure 3 represents two sections according to the invention. Using these sections a bladder is manufactured according to the invention.
Figure 4 represents the first step of the method according to the invention. A section is housed over the mould in its open position. The insert represents a detail analogue to Figure 4 displaying the different material wall thickness and internal diameters.
Figure 5 represents the step of the method in which the positioning rim of the bounding mould is housed with the positioning rim of a section.
Figure 6 represents the step of the manufacturing method in which a sealant is applied and a second section is fitted on the bounding mould, followed by the positioning of the counter-mould for the application of temperature and pressure.
Figure 7 represents a detail analogue to Figure 6 displaying the sealant between the positioning rims of two sections forming the bonding zone. Preferably, the thickness of the positioning rim is half the material wall thickness of the section.
Figure 8 represents a bladder manufactured according to the invention. The bounding and counter-mould are brought back to their original open position for removal of the bladder.
Figure 9 represent the bounding and counter-mould according to the invention.
Figure 10 represents different embodiments according to the invention: (a) bladder made of two substantially cylindrical sections, (b) bladder made of a substantially cylindrical and semi-spherical section, (c) bladder made of at least two sections comprising different bonding zones.

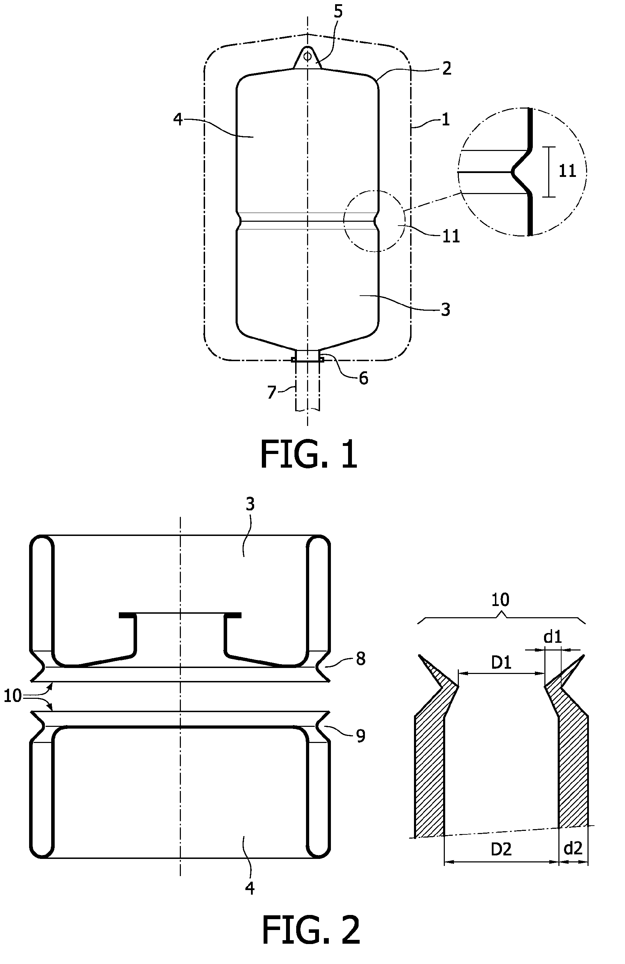

As represented in Figure 1, an expansion vessel 1 is fitted with a diaphragm consisting of a bladder fitted with a connection flange 6. The diaphragm is applied in an opening in the vessel 1 and connected to the conduit-pipe 7. The bladder 2 is made of two interconnected sections 3 and 4.

The bladder of an expansion vessel is designed to be charged with gas under pressure and to react against a liquid such as oil, gas or other medium, possibly also in gas form, charged into the container through the liquid port so that when the port is subsequently opened, the bladder will expand to force the liquid out of the liquid port to actuate the components of the hydraulic system in which the expansion vessel is used.

As the construction and operation of the expansion vessel thus described is conventional and well known to those skilled in the art, it will not be further described except as is necessary for a clear understanding of the invention.

The individual sections 3 and 4 from which the bladder will be constructed according to the invention are displayed in Figure 2. Sections are generally manufactured from a flexible material such as natural or synthetic rubber or elastomer such as butyl-IRR or SBR rubber or EPDM. In a variant, the sections 3-4, instead of being made of rubber, can be made of a thermoplastic elastomer, for example the elastomer known under the trademark Santoprene. In another variant, the elastomer is an epichlorohydrin polymer (ECO-polymer) or FPM.

The individual sections are made by moulding. The shape of the mould can take different forms such as substantially cylindrical or semi-spherical. The section can be formed with a neck providing an opening of substantial size for a connection flange 6.

The individual sections 3 and 4 have at least one open peripheral end 10. The open peripheral end 10 is provided with at least one circumferential rim 8-9 which serves as a positioning aid. In a preferred embodiment, the rim 8-9 has two different internal diameters D1 and D2. The positioning rim is preferably wedge-shaped.

In another preferred embodiment, the individual sections 3-4 have positioning rims 8-9 with an average wall thickness d1 smaller than the wall thickness d2 of the diaphragm. Preferably, the thickness of the positioning rim is half that of the wall thickness of the bladder, so that when the sections are joined together a bladder results with uniform wall thickness.

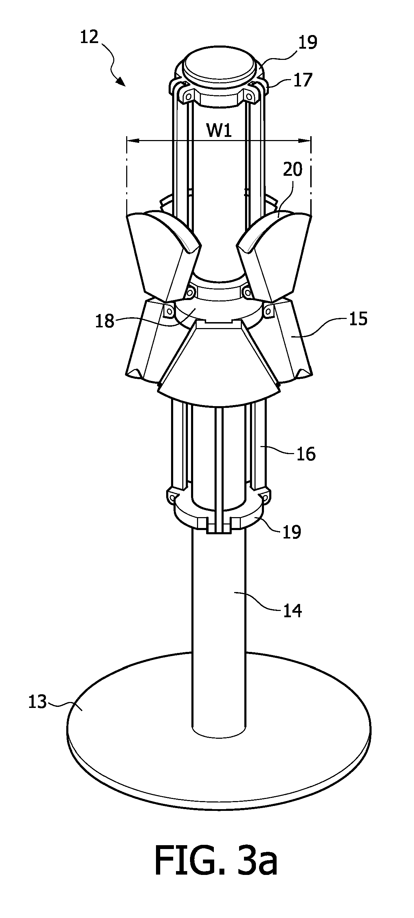

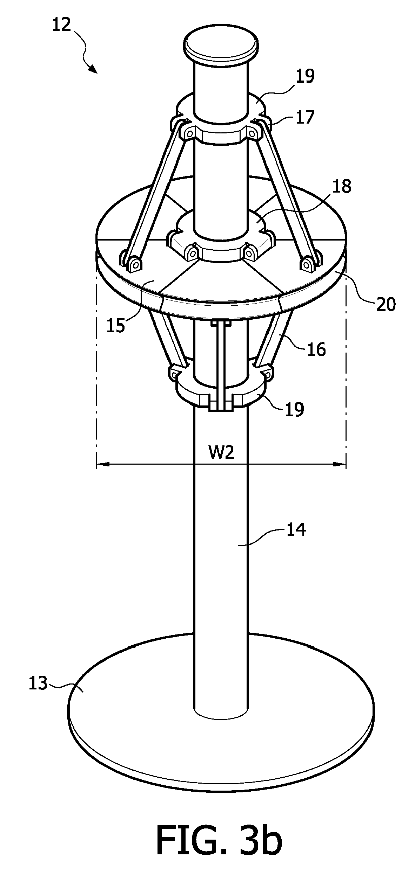

Individual sections are interconnected to form a bladder-shaped diaphragm with the use of a device as displayed in Figure 3. The device according to the invention comprises a frame 13, a support element 14 connected to said frame, whereby the support element 14 is provided with, and axially extending through, a bounding mould 12, which mould 12 is composed of segments 15, each of which is provided with control elements 16 connecting these segments and the support element 14, such that the bounding mould 12 is able to be positioned in an open segmented position (a) and a closed circular position (b). The sections 15 contain a positioning rim 20 suitable for the positioning and bonding of two elastic bladder type diaphragm sections.

In a preferred embodiment, the mould 12 is composed of segments 15, a central ring around said support element 14 and hinges 18, the hinges connecting said central ring

with said segments and each of the segments is provided with control elements 16 connecting these segments and the support element 14 by means of an outer ring 19 and hinges 17, such that the bounding mould 12 is able to be positioned in an open segmented position with width W1 (a) and a closed circular position with width W2 (b).

In a preferred embodiment, the positioning rim 20 of the sections 15 is complementary to the shape of the positioning rim of the sections 3-4. More preferably, the positioning rim is wedge-shaped. Most preferred is a device provided with a corresponding counter-mould able to enclose the bounding mould.

In a preferred embodiment of the device, the bounding mould consists of at least 3 segments, preferably more than 4, most preferably 6. As can be seen from the above description, the use of a segmented mould allows for a variable diameter of the sections.

In the method of the invention, said device is used for the manufacturing of a bladder for a bladder-shaped diaphragm consisting of at least two sections for use in an expansion vessel.

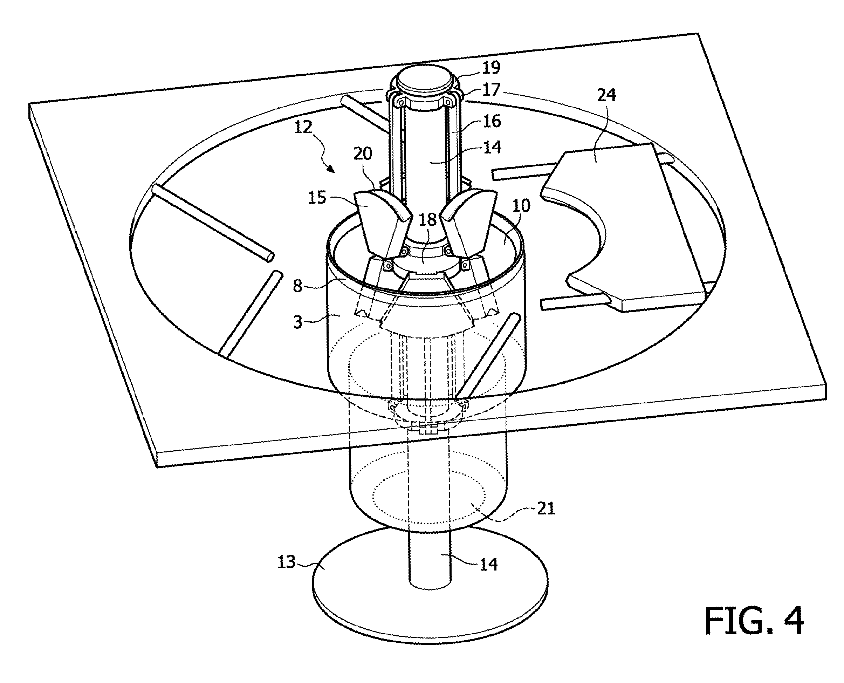

As an example the manufacture of a bladder 2 composed out of two interconnected cylindrical bladder sections 3-4 is described (Figures 4-9).

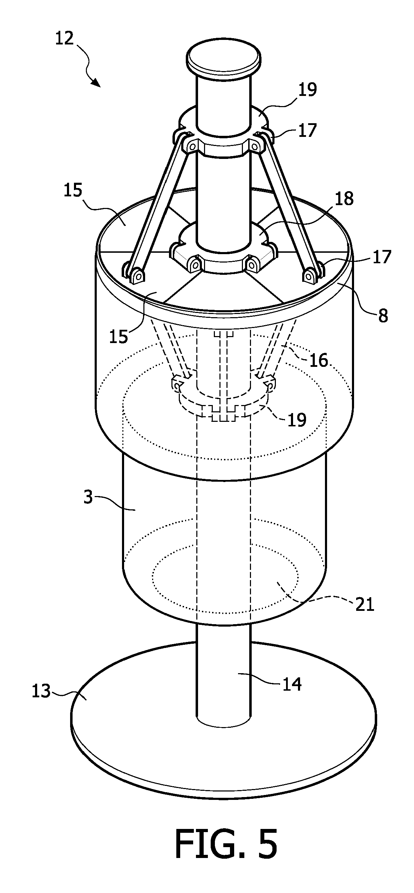

A device 12 is brought to its open position. In this position the segments 15 are essentially parallel to the supporting element 14 (Figure 4). A cylindrical-shaped section 3 with a second opening 21, which is smaller than the open peripheral end, is used. The section 3 is introduced over the supporting element 14 via its second opening 21. The device 12 is then brought from the open to the closed position by bringing the sections from an orientation parallel to an orientation perpendicularly to the supporting element 14 (Figure 5).

In a preferred embodiment, the bounding mould consists of at least 3 segments, preferably more than 4, most preferably 6. As can be seen from the above description, the use of a foldable mould has the advantage that sealing can be applied to an area with diameter larger than the diameter of the second opening 21.

The positioning rim of section 4 is positioned in the rim of the mould. The elasticity of the rubber gives flexibility to the material facilitating the positioning process.

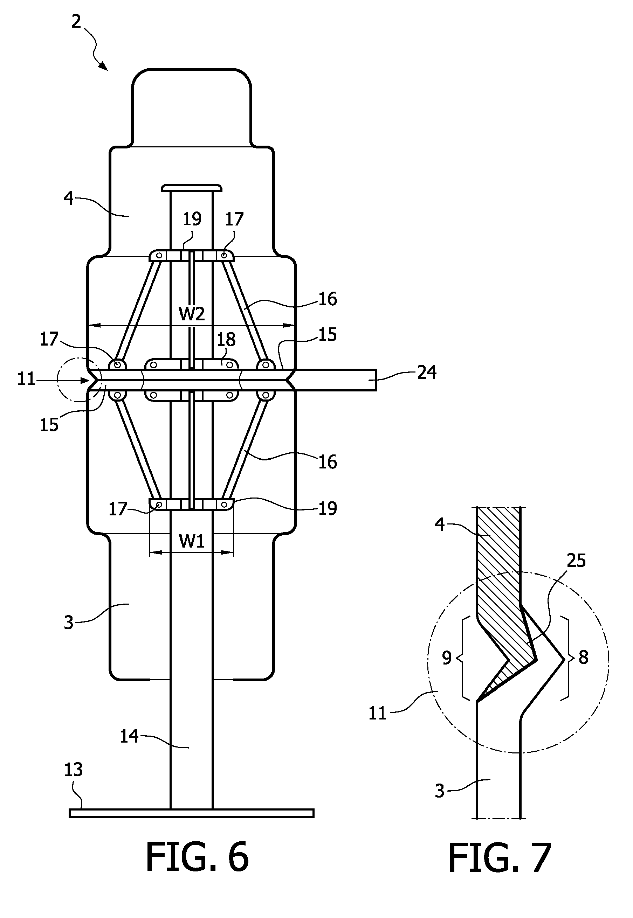

A joining material 25 is applied on the outer circumference of the positioning rim of the section (Figure 7). The joining material may consist of an adhesive, cement, or unvulcanized rubber.

A second rim of a bladder section positioned over the first rim, such that the joining material is enclosed in the bonding zone 11. The counter-mould 24 is brought against the bonding zone 11 to apply pressure (Figure 6). Depending on the joining material used, a supplementary heat treatment may be applied. A seal is thus formed interconnecting the sections. As can be seen from the above description, the use of a mould according to the invention has the advantage that pressure is only applied to the bonded zone 10, keeping material deformations to a minimum.

In a preferred embodiment, the thickness of the positioning rims is half that of the wall thickness of the bladder. When joined together a bladder results with uniform wall thickness. Moreover, this feature results in a uniform pressure distribution over the material when the sections are interconnected, resulting in a reduced number of defects.

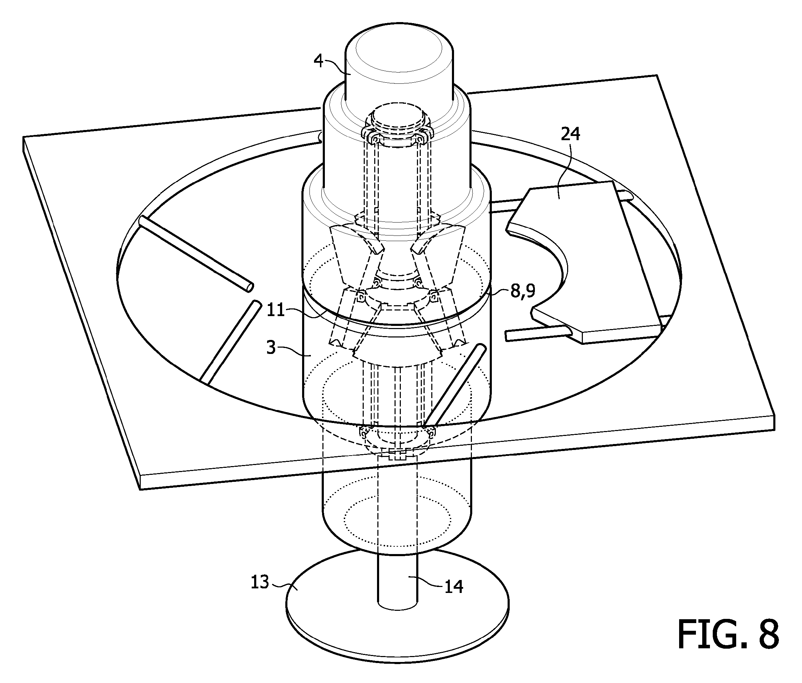

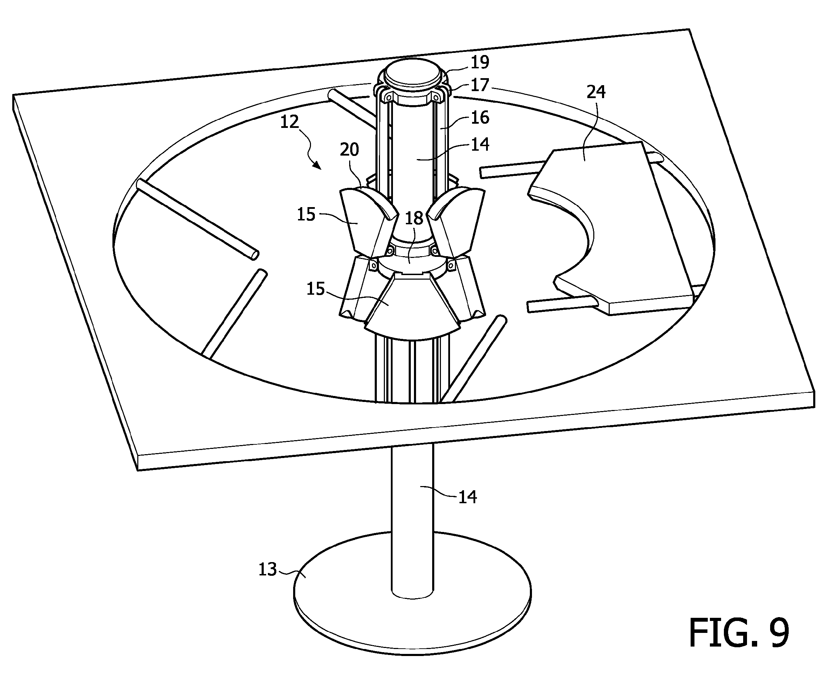

The counter-mould 24 is removed (Figure 8). The supporting mould 12 is moved to its closed position. The resulting bladder 2, consisting of interconnected sections 3 and 4, is removed (Figure 9).

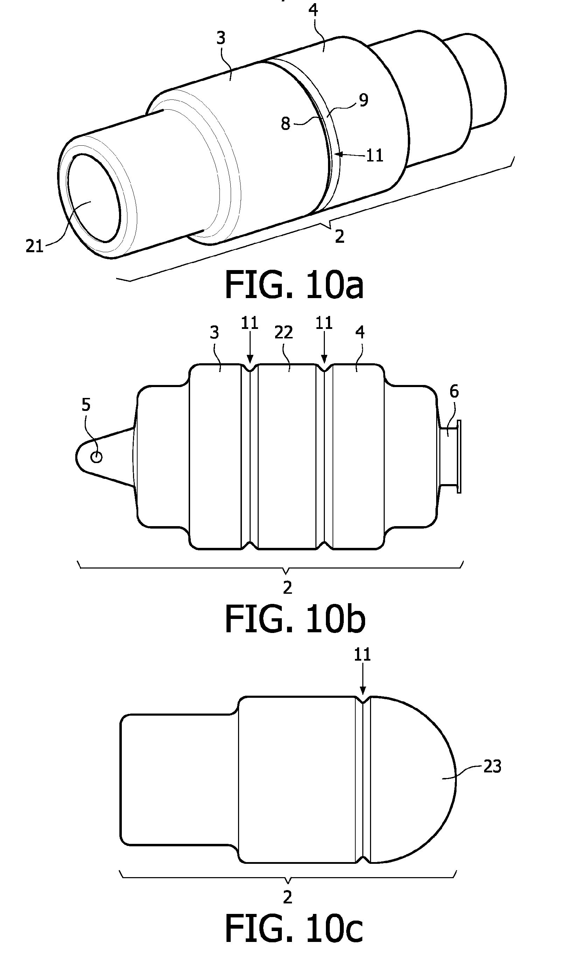

It is also possible to manufacture the bladder 2 from more than two sections. Additionally also other shapes are possible. Figure 10 represents different diaphragms that can be manufactured according to the invention: consisting of (a) two substantially cylindrical sections, (b) three substantially cylindrical sections, (c) a cylindrical section and a semi-spherical section 23.

The dimensions of the sections are determined by the mould in which they are manufactured. The bladder is shaped stepwise as described by the invention.

In a preferred embodiment, the method for manufacturing a bladder comprises at least three sections. A third substantially ring-shaped section 22 can be manufactured which is applied between the sections 3 and 4 in the manner described here above.

Sections with a second opening 21 as depicted in Figure 10a, can be processed further according to conventional means to conclude the manufacturing of a bladder-shaped diaphragm. Particularly, a rubber mould in the shape of a neck is secured together with the bladder in any suitable manner, such as bonding by hot or cold vulcanisation or by the use of a cement or by the use of adhesives, with or without heat treatment.

More suitably one of the sections was moulded with a neck providing a means for a connection flange with the advantage that no separate confection is necessary therefore (e.g. Figure 10 b). A further advantage is that all the bonded zones of the bladder-shaped diaphragm were manufactured using the method of the invention, meaning the surface area of the bonds was kept to a minimum, material deformation is reduced, the number of defective bladders is reduced. Moreover, even for large sized constructions, the method of the invention results in substantially uniform bladders, allowing standardized fitting into the housing of pressure vessels.

Upon completion of the bladder-shaped diaphragm one extremity thereof is suspended in the vessel, for instance by a suspension loop 5, and the connection flange 6 is applied in an opening in the vessel and connected to the conduit-pipe 7. In order to use the expansion vessel, the space between the bladder 2 and the vessel 1 is filled with gas under pressure while the expanding fluid, such as for instance water, runs through the connection flange 7 into the bladder 2.

## Claims

1. Device suitable for the positioning and bonding of two elastic bladder type diaphragm sections each section is provided with at least one rim, whereby the rims of the sections will be secured together in any suitable manner, such as vulcanisation said device comprising, a frame, a support element connected to said frame, whereby the support element is provided with, and axially extending through, a bounding mould, which mould is composed of segments, each of which is provided with control elements connecting these segments and the support element, such that the bounding mould is able to be positioned in an open segmented position and a closed circular position, in which said closed position the mould is able to support the rim of said sections under a uniform circumferential tension.

2. Device according to claim 1, wherein the bounding mould consists of at least 3 segments, preferably more than 4, most preferably 6.

3. Device according to any of claims 1 or 2, wherein the rims of the sections contain a positioning rim which is complementary to the rim in the segments of the bounding mould.

4. Device according to any of claims 1 to 3, wherein the rim in the segments of the bounding mould is preferably wedge-shaped.

5. Device according to claim 1 to 4, further provided with a corresponding counter-mould able to enclose the bounding mould.

6. Section of a flexible material, such as rubber, suitable for use with a device according to any of claims 1 to 5, comprising a circumferential positioning rim, with a first internal diameter and a second internal diameter, which second diameter is different from the first.

7. Section according to claim 6, wherein the positioning rim is preferably wedge-shaped

8. Section according to any of claims 6 or 7, wherein the positioning rim is complementary to the rim shape of the bounding mould.

9. Section according to any of claims 6 to 8 claim 6, wherein the positioning rim has an average wall thickness smaller than the wall thickness of the bladder.

10. Bladder for use in an expansion vessel, consisting of several interconnected sections according to any of claims 6 to 9.

11. Bladder according to claim 10, whereby the interconnected sections are joined at their positioning rims using the device of any of claims 1 to 5.

12. Bladder according to any of claims 10 to 11, whereby the interconnected section has a thickness substantially similar to the average wall thickness of the bladder.

13. Method for manufacturing a bladder, comprising the use of a device according to any of claims 1 to 5.

14. Method for manufacturing a bladder, according to claim 13, comprising at least three sections according to any of claims 6 to 9.
